# EUROPÄISCHE PATENTANMELDUNG

(11) **EP 1 484 581 A2**
(43) Veröffentlichungstag der Anmeldung: **08.12.2004**
(21) Anmeldenummer: 04102269.0
(22) Anmeldetag: 25.05.2004
(51) Int. Cl.: G01C 21/34

(54) **System und Verfahren zum Berechnen und/oder zum Ermitteln von Routen**

(30) Priorität: 03.06.2003 DE 10324961
(71) Anmelder: ROBERT BOSCH GMBH, 70442 Stuttgart (DE)
(72) Erfinder: MAY, Thomas, 38302, Wolfenbuettel (DE); NEUKIRCHNER, Ernst-Peter, 31139, Hildesheim (DE); KOPMANN, Wolfgang, 31139, Hildesheim (DE)

(57) **Zusammenfassung**

Um ein System (100) sowie ein Verfahren zum Berechnen und/oder zum Ermitteln mindestens einer von mindestens einem Stand- und/oder Startort (A) zu mindestens einem Zielort (Z) oder zu mindestens einem Zielgebiet führenden Route eines Fortbewegungsmittels (400), insbesondere eines Kraftfahrzeugs, auf der Grundlage von Daten, Informationen und/oder Meldungen, insbesondere auf der Grundlage von Verkehrswege beschreibenden Verkehrsweginformationen, so weiterzuentwickeln, daß die Routenführung zumindest partiell einer überprüfenden Bewertung zugeführt werden kann, nicht zuletzt um die Durchsetzung kollektiver Verkehrsleitstrategien oder Verkehrsregelstrategien mit der autonomen Bestimmung von Fahrtrouten zu individuellen Fahrtzielen (Z) in einem Informationssystem (300), insbesondere in einem Navigationssystem, zu kombinieren, wird vorgeschlagen,
- daß die Route oder zumindest ein Abschnitt der Route oder mindestens ein Teil der Route
   -- anhand mindestens eines Kriteriums und/oder anhand mindestens eines Parameters bewertet wird und/oder
   -- in Abhängigkeit von mindestens einem Kriterium und/oder in Abhängigkeit von mindestens einem Parameter berechnet und/oder ermittelt wird und
- daß das Kriterium und/oder der Parameter
   -- durch mindestens ein sich insbesondere auf der Route ereignendes zeitabhängiges Ereignis und/oder
   -- durch den Zielort (Z) bzw. durch das Zielgebiet definiert wird.

## Beschreibung

### Technisches Gebiet

Die vorliegende Erfindung betrifft ein System sowie ein Verfahren zum Berechnen und/oder zum Ermitteln mindestens einer von mindestens einem Stand- und/oder Startort zu mindestens einem Zielort oder zu mindestens einem Zielgebiet führenden Route eines Fortbewegungsmittels, insbesondere eines Kraftfahrzeugs, auf der Grundlage von Daten, Informationen und/oder Meldungen, insbesondere auf der Grundlage von Verkehrswege beschreibenden Verkehrsweginformationen.

### Stand der Technik

Für Fortbewegungsmittel, insbesondere für Kraftfahrzeuge oder für Straßenfahrzeuge, bestimmte Zielführungssysteme mit digitaler Karte an Bord, auf deren Basis Routen zwischen einem Startpunkt und mindestens einem wählbaren Zielpunkt berechnet werden können und die entlang diesen Routen Weginformationen akustisch und/oder graphisch ausgeben können, sind konventionellerweise bekannt.

Des weiteren sind auch Systeme bekannt, die über eine drahtlose Verbindung und über einen Empfänger kodierte Verkehrsnachrichten empfangen können und die diese kodierten Verkehrsnachrichten dazu verwenden, Routen entsprechend der Verkehrssituation zu optimieren. Hierzu wird zumeist der Fahrzeitbedarf für die betroffenen Streckenabschnitte erhöht, so daß sich Alternativrouten ergeben.

Als nachteilig wird bei diesen bestehenden Systemen jedoch empfunden, daß Behörden oder andere Einrichtungen, deren Aufgabe es ist, den Verkehr in bestimmten Regionen so zu beeinflussen, daß Überlastungen von Straßenabschnitten vermieden oder zumindest reduziert werden, keinen direkten und vorhersagbaren Einfluß auf die in den Fortbewegungsmitteln berechneten Routen haben.

Zwar sind moderne Navigationssysteme in der Lage, neben der einfachen Routenberechnung auch die aktuelle Verkehrslage zu berücksichtigen; die Berücksichtigung der zeitlichen Variation der durch die Behörden oder anderen Einrichtungen zum Beispiel mittels Verkehrsleitsystemen oder Verkehrsregelsystemen bereitgestellten Informationen ist jedoch mit den derzeitigen technischen Mitteln nicht möglich.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfmdung die Aufgabe zugrunde, ein System sowie ein Verfahren der eingangs genannten Art so weiterzuentwickeln, daß die Routenführung zumindest partiell einer überprüfenden Bewertung zugeführt werden kann, nicht zuletzt um die Durchsetzung kollektiver Verkehrsleitstrategien oder Verkehrsregelstrategien mit der autonomen Bestimmung von Fahrtrouten zu individuellen Fahrtzielen in einem Informationssystem, insbesondere in einem Navigationssystem, zu kombinieren.

Diese Aufgabe wird gemäß der Lehre der vorliegenden Erfindung durch ein System mit den im Anspruch 1 genannten Merkmalen sowie durch ein Verfahren mit den im Anspruch 13 genannten Merkmalen gelöst. Vorteilhafte Ausgestaltungen und zweckmäßige Weiterbildungen der vorliegenden Erfindung sind in den jeweiligen Unteransprüchen gekennzeichnet.

Mithin liegt der Kern der vorliegenden Erfindung in der Möglichkeit, die Route oder zumindest Abschnitte bzw. Teile hiervon einer insbesondere ereignisabhängigen und/oder insbesondere zielabhängigen Bewertung, Berechnung und/oder Ermittlung zu unterziehen.

In erfindungswesentlicher Weiterbildung sowohl des vorliegenden Systems als auch des vorliegenden Verfahrens kann das Bewerten, das Berechnen und/oder das Ermitteln also
- in Abhängigkeit von mindestens einem sich insbesondere auf der Route ereignenden zeitabhängigen Ereignis [= sogenannte "Berücksichtigung von zeitabhängigen Ereignissen bzw. von Zeitinformationen bei der Route(nberechnung)"], zum Beispiel
   -- in Abhängigkeit von mindestens einem sich auf der Route befindlichen zeitabhängigen Hindernis, wie etwa in Abhängigkeit von mindestens einem überbreiten Schwertransporter, oder
   -- in Abhängigkeit von mindestens einer sich auf der Route befindlichen zeitabhängigen Verkehrsregeleinheit, wie etwa in Abhängigkeit von mindestens einer Ampelanlage, und/oder
- in Abhängigkeit vom Zielort bzw. in Abhängigkeit vom Zielgebiet [= sogenannte "zielabhängige Bewertung einer Route"]
vorgenommen werden.

Hierdurch entsteht insofern ein besonderer Nutzen, als mittels der Lehre der vorliegenden Erfindung Verkehrsströme trennbar werden, die konventionellerweise zumindest teilweise auf gemeinsamen Routenabschnitten verlaufen würden.

Auf diese Weise kann das Entstehen eines Bereichs hoher Verkehrsdichte oder sogar das Entstehen einer zeitraubenden Stausituation in zuverlässiger Weise vermieden werden; alternativ oder ergänzend hierzu kann der Benutzer des Systems in die Lage versetzt werden, einen Bereich hoher Verkehrsdichte bzw. eine zeitraubende Stausituation zu umfahren.

Gemäß einer bevorzugten Ausgestaltung sowohl des vorliegenden Systems als auch des vorliegenden Verfahrens kann das Kriterium und/oder der Parameter
- in Abhängigkeit vom zeitabhängigen Ereignis und/oder
- in Abhängigkeit vom Zielort bzw. vom Zielgebiet
variieren.

In diesem erfindungswesentlichen Falle ergibt sich das Kriterium und/oder der Parameter nicht oder nicht ausschließlich aus den insbesondere intrinsischen Eigenschaften des Zielorts bzw. des Zielgebiets, sondern beispielsweise in Zusammenhang mit einer Verkehrsleitstrategie.

Erfolgt die Bewertung von Straßenabschnitten bei der Berechnung und/oder Ermittlung von Routen gemäß der vorstehend letztaufgezählten Variante, das heißt in Abhängigkeit vom gewählten Ziel bzw. in Abhängigkeit vom gewählten Zielgebiet, so können diese unterschiedlichen Bewertungskriterien und/oder diese unterschiedlichen Bewertungsparameter in vorteilhafter Weise extern beeinflußt und in vorteilhafter Weise in das Fortbewegungsmittel übertragen werden.

Grundsätzlich sind hinsichtlich des Bereitstellens der (Bewertungs-)Kriterien und/oder der (Bewertungs-)Parameter im Rahmen der vorliegenden Erfmdung mehrere, miteinander vereinbare Ausgestaltungsvarianten möglich:

Das Kriterium und/oder der Parameter, anhand dessen die Bewertung, die Berechnung und/oder die Ermittlung der Route bzw. des Routenabschnitts oder Routenteils durchführbar ist, kann gemäß einer vorteilhaften Ausgestaltungsform der vorliegenden Erfindung stationär, zum Beispiel mittels mindestens eines mindestens einer Vorrichtung zuordbaren, insbesondere austauschbaren und/oder insbesondere mobilen Datenträgers, beeinflußt werden.

Alternativ oder in Ergänzung hierzu kann das kriterium- und/oder parameterinduzierte Bewerten, Berechnen und/oder Ermitteln der Route bzw. des Routenabschnitts oder Routenteils in bevorzugter Weise extern, zum Beispiel durch mindestens einen Informationsanbieter, insbesondere durch mindestens ein Verkehrsleit- oder -regelsystem, über mindestens eine insbesondere drahtlose Verbindung beeinflußt werden.

Auf diese Weise können durch Verkehrsleit- oder -regelsysteme zum Beispiel Einschränkungen des Verkehrsflusses in der Routenberechnung und in der Benutzerführung des Navigationssystems berücksichtigt werden; insbesondere können die zeitlichen Randbedingungen, die
- durch Verkehrshindernisse, wie etwa durch überbreite Schwertransporter und/oder durch dergleichen,
- durch Verkehrsleit- oder -regelsysteme, wie etwa durch Ampeln, durch feste zeitabhängige Verkehrsregeln und/oder durch dergleichen,
- durch andere Verkehrswege, wie etwa durch Fährzeiten, durch Schienenverkehr und/oder durch dergleichen,
bedingt sind, berücksichtigt werden.

Auf diese Weise kann der Navigationsprozeß optimiert werden, so daß eine Routenbestimmung unter Einbeziehung von Verkehrsleitstrategien oder Verkehrsregelstrategien erfolgt, indem ein Informationsgerät, insbesondere ein Navigationsgerät, an mindestens ein Verkehrsleitsystem oder Verkehrsregelsystem angebunden wird.

Die vorliegende Erfindung beschreibt hierzu ein mindestens einem Informationssystem, insbesondere mindestens einem Navigationssystem, zugeordnetes System sowie ein Verfahren, gemäß dem das System arbeitet und das ein Optimieren der Routenführung des Informationssystems durch den Abgleich bzw. die Synchronisation mit Verkehrsleit-/-regelsystemen ermöglicht.

Dementsprechend kann die zu berechnende und/oder zu ermittelnde Route mit den durch das mindestens eine Kriterium und/oder durch den mindestens einen Parameter beeinflußten oder bewerteten Daten, Informationen und/oder Meldungen
- des Informationsanbieters und/oder
- des Datenträgers
abgeglichen und/oder synchronisiert wird. Hierdurch kann eine Routenführung erfolgen, die zum einen ein ruhigeres und demzufolge angenehmeres sowie sparsameres Fahren und zum anderen eine schnellere Zielführung ermöglicht.

Als eine erfindungswesentliche Maßnahme hierzu können Verkehrsströme zu bestimmten Zielpunkten oder Zielgebieten vorzugsweise auf vorgegebenen Straßen geführt werden. Des weiteren können Fortbewegungsmittel, die zu anderen Zielen unterwegs sind, veranlaßt werden, bestimmte Strecken bei der Berechnung von Routen zu meiden und damit kritische Gebiete zu umgehen.

Das vorliegende System und das vorliegende Verfahren ermöglichen es erfindungsgemäß. Fortbewegungsmittel mit Zielfuhrungseinrichtungen und mit an Bord durchgeführter Routenberechnung in Abhängigkeit vom gewählten Fahrtziel in bevorzugter Weise entlang bestimmter Streckenabschnitte zu führen und/oder andere Streckenabschnitte zu meiden.

Hierbei kann zweckmäßigerweise durch Parameter, insbesondere durch Gewichtungsparameter, einstellbar sein, wie stark von ausschließlich autonom berechneten Routen abgewichen werden kann, um zu bevorzugende Streckenabschnitte zu nutzen und/oder zu meidende Streckenabschnitte zu umgehen.

Jedem der Kriterien kann zweckmäßigerweise mindestens einer der Parameter, insbesondere mindestens einer der Gewichtungsparameter, zugeordnet werden. Unabhängig hiervon oder in Verbindung hiermit kann der Parameter, insbesondere der Gewichtsparameter, in vorteilhafter Weise
- zeitabhängig sein und/oder
- mindestens eine Verkehrsprognose aufgrund statistischer Daten, Informationen und/oder Meldungen enthalten.

Gemäß einer besonders erfinderischen Weiterbildung sowohl des vorliegenden Systems als auch des vorliegenden Verfahrens ist der vorzugsweise externe Informationsanbieter als mindestens ein insbesondere behördlich geregeltes Verkehrsleitsystem oder Verkehrsregelsystem ausgebildet.

In diesem Falle bezieht das Informationssystem, insbesondere Navigationssystem, vom Verkehrsleit- oder -regelsystem eine Beschreibung der Verkehrsleit- bzw. -regeImaßnahmen, das heißt die Daten, Informationen und/oder Meldungen beziehen sich auf Anweisungen, die besagen, zu welcher Zeit welche Verkehrsleit-/-regelmaßnahmen vorgenommen werden sollen.

In erfindungswesentlicher Weise können derartige Verkehrsleit-/-regelmaßnahmen zum Beispiel sein:
- Ampelschaltungen
   (Nutzung einer sogenannten grünen Welle oder
   gegebenenfalls Umfahren einer Ampelanlage);
- Beschränkungen von Bahnübergängen oder von Schienenübergängen;
- Fährzeiten;
- dynamische Begrenzungen der Geschwindigkeit,
   zum Beispiel mittels Verkehrsleitsystemen oder mittels sogenannter Schilderbrücken über Schnellstraßen; und/oder
- statische Begrenzungen der Geschwindigkeit.

Die Navigation berechnet in mindestens einer Rechen-/Verarbeitungseinheit der Vorrichtung zu etwaigen Verkehrsleit-/-regelmaßnahmen aufgrund der übermittelten Daten, Informationen und/oder Meldungen nicht nur optimale Route, sondern auch die optimale Anfahrtsgeschwindigkeit oder wählt eine alternative Route.

Zusätzlich zur Routenführung kann das Informationssystem dem Führer des Fortbewegungsmittels gemäß einer bevorzugten Weiterbildung der vorliegenden Erfindung beim Anfahren auch eine Geschwindigkeitsempfehlung geben, die optionalerweise auch in ein Tempomatsystem eingespeist werden kann.

Die Übermittlung der Daten, Informationen und/oder Meldungen, insbesondere der Verkehrsleitdaten bzw. Verkehrsregelmaßnahmen, zur Vorrichtung und damit zum Informationssystem kann erfindungsgemäß in Abhängigkeit von der Realisierung des Informationssystems auf verschiedene Weise erfolgen:

Bei der sogenannten Off-Board-Navigation kann mindestens eine Servereinheit der Off-Board-Navigation über mindestens eine Internetverbindung mit den Verkehrsleit-/regelsystemen verbunden sein; statische Daten, Informationen und/oder Meldungen kann die Servereinheit auch direkt vorhalten.

Bei der sogenannten On-Board-Navigation kann das On-Board-Navigationssystem die Daten, Informationen und/oder Meldungen zum Beispiel
- über Rundfunkdienste, wie etwa über D[igital]A[udio]B[roadcasting], und/oder
- über Funkkommunikation, insbesondere über Mobilfunkkommunikation oder über Mobiltelephonkommunikation, wie etwa
   -- über Bluetooth,
   -- über G[eneral]P[acket]R[adio]S[ervice],
   -- über G[lobal]S[ystem for]M[obile Communication],
   -- über U[niversal]M[obile]T[elecommunication]S[ystem],
   -- über W[ireless]A[pplication]P[rotocol] und/oder
   -- über W[ireless]L[ocal]A[rea]N[etwork], und/oder
- über mindestens einen insbesondere mobilen Datenträger, den der Nutzer zum Beispiel am heimischen Internetterminal geladen hat, wie etwa
   -- C[ompact]D[isc],
   -- D[igital]V[ersatile]D[isc],
   -- Diskette,
   -- Flashspeichermedium,
   -- Handheld,
   -- Handy,
   -- Laptop,
   -- Mobiltelephon,
- Notebook,
   -- Organizer,
   -- Palm oder Palmtop und/oder
   -- P[ersonal]D[igital]A[ssitant],
erhalten.

Die so vom Informationsanbieter erhaltenen Daten, Informationen und/oder Meldungen werden auf der Servereinheit (--> sogenannte Off-Board-Navigation) oder im Kraftfahrzeug (--> sogenannte On-Board-Navigation) mit der zum Beispiel durch DCF77 oder durch G[lobal]P[ositioning]S[ystem] verfügbaren Zeit verglichen, so daß in der Rechen-/Verarbeitungseinheit der Vorrichtung berechnete Prognosen für die Fahrtzeit auf Teilstrecken verwendet werden können, um die Gesamtroute zu optimieren und um die Geschwindigkeitsempfehlungen zu erzeugen.

Der Fachmann auf dem vorliegenden technischen Gebiet wird im Hinblick auf die vorliegende Erfindung insbesondere zu schätzen wissen, daß das vorliegende System sowie das vorliegende Verfahren die Vorteile einer autonomen Zielführung mit den Vorteilen einer zentral, zum Beispiel behördlich durch mindestens ein Verkehrsleit-/regelsystem gesteuerten Zielführung kombiniert und zusätzlich die Notwendigkeit einer bidirektionalen Kommunikationsverbindung vermeidet.

So kann ein Benutzer, wie auch bei konventionellen, ausschließlich autonom arbeitenden Systemen üblich, die Kriterien der Routenberechnung, wie etwa
- kurze Fahrtroute,
- schnelle Fahrtroute,
- Meiden von Mautstraßen oder dergleichen
sowie sein Fahrziel wählen, ohne daß diese Informationen an den behördlichen oder anderweitig autorisierten Informationsanbieter übertragen werden müssen.

Im Hinblick auf die vorliegende Erfindung ist als weiterer Vorteil zu konstatieren, daß Verkehrsströme gezielt aufgeteilt werden können und beispielsweise sämtliche Kraftfahrzeuge zu einer Großveranstaltung über vorgegebene Straßen geführt werden können, während alle anderen Kraftfahrzeuge diese Straßen meiden können.

Des weiteren wird als zweckmäßig empfunden, daß das System gemäß der vorliegenden Erfindung wie auch das Verfahren gemäß der vorliegenden Erfindung mit existierenden Informationssystemen kompatibel ist, was eine Erweiterung bestehender Zielführungsapplikationen ermöglicht.

Die vom insbesondere externen Informationsanbieter kommenden Daten, Informationen und/oder Meldungen können in bevorzugter Weise über mindestens ein Rundfunksystem (sogenanntes "Broadcast-System") übertragen werden, was eine schnelle, weite und anbieterunabhängige Verbreitung begünstigt.

Die vorliegende Erfmdung betrifft des weiteren ein mindestens einem Fortbewegungsmittel, insbesondere mindestens einem Kraftfahrzeug, zugeordnetes Informationssystem, insbesondere mindestens ein vorzugsweise prädiktives Assistenzsystem oder mindestens ein vorzugsweise hybrides Navigationssystem,
- aufweisend mindestens eine Vorrichtung gemäß der vorstehend dargelegten Art und/oder
- gesteuert durch ein Verfahren gemäß der vorstehend dargelegten Art.

Das System gemäß der vorliegenden Erfindung, die Vorrichtung gemäß der vorliegenden Erfindung, das Verfahren gemäß der vorliegenden Erfindung und/oder das Informationssystem gemäß der vorliegenden Erfindung beschränken sich nicht auf die Anwendung zur Routenführung, sondern können auch andere Anwendungen allgemeinerer Natur oder speziellerer Natur mit einschließen, so etwa bei insbesondere prädiktiven Assistenzsysteme oder bei hybriden (on-board-/off board-)Informations- und Navigationssystemen.

Dementsprechend betrifft die vorliegende Erfindung des weiteren die Verwendung mindestens einer Vorrichtung gemäß der vorstehend dargelegten Art und/oder eines Verfahrens gemäß der vorstehend dargelegten Art und/oder mindestens eines Informationssystems gemäß der vorstehend dargelegten Art
- beim Berechnen und/oder beim Ermitteln mindestens einer von mindestens einem Stand- und/oder Startort zu mindestens einem Zielort oder zu mindestens einem Zielgebiet führenden Route mindestens eines Fortbewegungsmittels auf der Grundlage von Verkehrswege beschreibenden Verkehrsweginformationen,
- beim Ausgeben von Verkehrsweginformationen entlang der berechneten und/oder ermittelten Route,
- beim Beeinflussen von Funktionen, wie etwa Regeln der Geschwindigkeit und/oder des Lichts, mindestens eines Fortbewegungsmittels,
- beim Geben von Warnhinweisen, zum Beispiel vor Gefahrenstellen, für den Führer mindestens eines Fortbewegungsmittels und/oder
- beim Optimieren der Route entsprechend der Verkehrssituation, zum Beispiel auf der Grundlage von über mindestens eine drahtlose Verbindung empfangenen, insbesondere kodierten Verkehrsnachrichten.

### Kurze Beschreibung der Zeichnungen

Wie bereits vorstehend erörtert, gibt es verschiedene Möglichkeiten, die Lehre der vorliegenden Erfindung in vorteilhafter Weise auszugestalten und weiterzubilden.

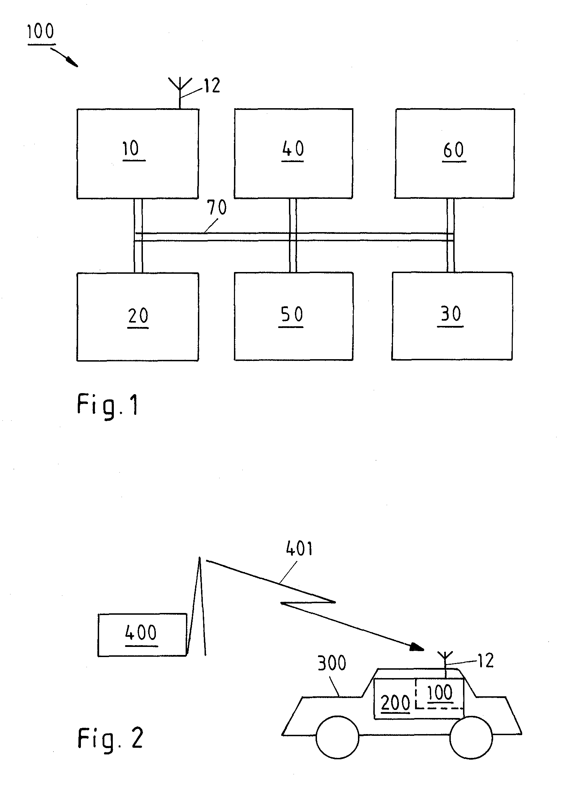

Hierzu wird einerseits auf die den Ansprüchen 1 und 13 nachgeordneten Ansprüche verwiesen, andererseits werden weitere Ausgestaltungen, Merkmale und Vorteile der vorliegenden Erfindung nachstehend anhand des durch die Figuren 1 bis 4 veranschaulichten Ausführungsbeispiels näher erläutert.

Es zeigt:
Fig. 1 in schematischer, anhand Funktionsblöcken veranschaulichter Darstellung ein Ausführungsbeispiel für eine gemäß dem Verfahren gemäß der vorliegenden Erfindung arbeitende, an Bord eines Fortbewegungsmittels angeordnete und mit Daten, Informationen und/oder Meldungen von einem externen Informationsanbieter versorgte Vorrichtung gemäß der vorliegenden Erfindung;
Fig. 2 in schematischer Darstellung ein Ausführungsbeispiel für ein die Vorrichtung aus Fig. 1 aufweisendes System gemäß der vorliegenden Erfindung;
Fig. 3 in schematischer Darstellung ein Ausführungsbeispiel für das Konzept der alternativen Routenführung nach dem Verfahren gemäß der vorliegenden Erfindung; und
Fig. 4 in schematischer Darstellung ein weiteres Ausführungsbeispiel für das Konzept der alternativen Routenführung nach dem Verfahren gemäß der vorliegenden Erfmdung.

Gleiche oder ähnliche Ausgestaltungen, Elemente oder Merkmale sind in den Figuren 1 bis 4 mit identischen Bezugszeichen versehen.

### Bester Weg zur Ausführung der Erfindung

Mittels der anhand Figur 1 exemplarisch veranschaulichten Vorrichtung (= Zielführungssystem 200), die nach dem Verfahren gemäß der vorliegenden Erfindung arbeitet und in ein (Gesamt-)System 100 (vgl. Figur 2) integriert ist, kann bei einem einem Kraftfahrzeug 400 (vgl. Figur 2) zugeordneten Navigationssystem 300 (vgl. Figur 2), das von einem Startort A zu einem Zielort Z führende Routen berechnet und ermittelt, das Berechnen und/oder das Ermitteln eben dieser Route in Abhängigkeit von bestimmten Daten, Informationen und/oder Meldungen beeinflußt werden.

Die Beeinflussung im System 100 gemäß Figur 2 beruht erfindungsgemäß darauf, daß die zu berechnende und zu ermittelnde Route oder zumindest ein Abschnitt oder Teil der zu berechnenden und zu ermittelnden Route anhand von Kriterien und/oder anhand von Parametern, insbesondere anhand von Gewichtungsparametern, bewertbar ist.

In diesem Sinne kann das Berechnen und das Ermitteln der (zumindest partiellen) Route des Kraftfahrzeugs 400 in Abhängigkeit der Kriterien und/oder in Abhängigkeit der Parameter, insbesondere der Gewichtungsparameter, erfolgen. Diese Kriterien und/oder diese Parameter, insbesondere diese Gewichtungsparameter, können in erfindungswesentlicher Weise
- zeitabhängig sein und/oder
- zielabhängig sein und/oder
- mindestens eine Verkehrsprognose aufgrund statistischer Daten, Informationen und/oder Meldungen enthalten.

Hierdurch entsteht für den Benutzer des Systems 100, das heißt für den Führer des Kraftfahrzeugs 400, insofern ein besonderer Nutzen, als durch die zeitabhängigen und/oder zielabhängigen Kriterien bzw. Parameter Verkehrsströme trennbar werden, die ansonsten zumindest teilweise auf gemeinsamen Routenabschnitten verlaufen würden.

Auf diese Weise wird das Entstehen eines Bereichs hoher Verkehrsdichte oder sogar das Entstehen einer zeitraubenden Stausituation in zuverlässiger Weise vermieden; alternativ oder ergänzend hierzu wird der Benutzer des Systems 100, das heißt der Führer des Kraftfahrzeugs 400 in die Lage versetzt, einen Bereich hoher Verkehrsdichte bzw. eine zeitraubende Stausituation zu umfahren.

Hierbei zeichnet sich das auf dem Verfahren gemäß der vorliegenden Erfindung beruhende System 100 gemäß Figur 2 unter anderem dadurch aus, daß das Kriterium bzw. der Parameter
- in Abhängigkeit vom zeitabhängigen Ereignis und/oder
- in Abhängigkeit vom Zielort Z bzw. vom Zielgebiet
variiert werden kann.

Im Falle einer derartigen Variation ergibt sich das Kriterium bzw. der Parameter nicht oder nicht ausschließlich aus den Eigenschaften des Zielorts Z bzw. des Zielgebiets, sondern in Zusammenhang mit einer insbesondere komplexen Verkehrsleitstrategie.

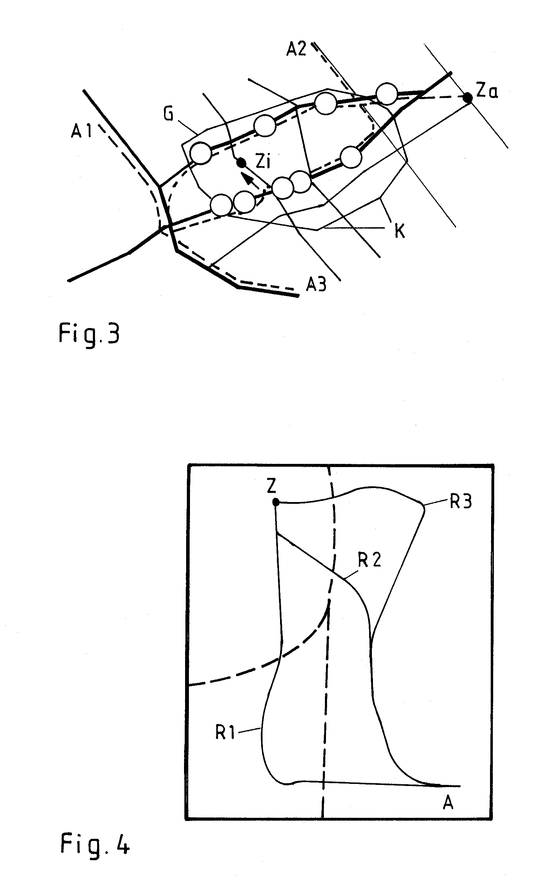

Zum praktischen Verwirklichen des Systems 100 wie auch des Verfahrens kann die Zielführungsvorrichtung 200 mit autonomer Routenberechnung an Bord des Kraftfahrzeugs 400 die Daten, Informationen und/oder Meldungen über eine drahtlose Funkverbindung 502 von einem externen Informationsanbieter (= Verkehrsleit-/regelsystem 500) empfangen (vgl. Figur 2); diese Daten, Informationen und/oder Meldungen beeinflussen die Berechnung der Fahrtrouten in Abhängigkeit vom Fahrtziel Z (vgl. Figur 3) und/oder in Abhängigkeit zeitlicher Randbedingungen (vgl. Figur 4).

Dementsprechend weist die Vorrichtung 200 gemäß Figur 1 eine Aufnahme/Empfangseinheit 10 (sogenannten Empfänger oder Receiver)
- zum Empfangen von Daten, Informationen und/oder Meldungen, zum Beispiel in Form von Streckenvorgaben und in Form von Zielinformationen, über die drahtlose Verbindung 502 und/oder
- zum Aufnehmen mindestens eines austauschbaren, mobilen sowie stationär Daten, Informationen und/oder Meldungen enthaltenden Datenträgers 600 mittels eines Einführ/Aufnahmeschlitzes 602 auf.

Des weiteren ist in der Vorrichtung 200 eine Einrichtung 20 zur nicht-flüchtigen Speicherung einer digitalen Karte des Straßennetzes (sogenanntes Map Storage) sowie eine (zweite) Speichereinheit 50 (sogenanntes Memory) zur Speicherung einer berechneten bzw. ermittelten Route vorgesehen.

Eine nachstehend noch näher erläuterte, der Vorrichtung 200 zugeordnete Geschwindigkeitsregelungseinrichtung 30 in Form eines Tempomats dient zum Regeln der Geschwindigkeit des Kraftfahrzeugs 400 auf der Grundlage der vom Informationsanbieter 500 über die Funkverbindung 502 an die Vorrichtung 200 übermittelten, mittels der Aufnahme-/Empfangseinheit 10 empfangenen, kriteriumsbeeinflußten und/oder parameterbewerteten Daten, Informationen und/oder Meldungen.

Eine ebenfalls der Vorrichtung 200 zugeordnete Zielauswahleinheit 32 (sogenannte Destination Selection Means) dient zur Zielauswahl auf der Grundlage der vom Informationsanbieter 500 über die Funkverbindung 502 an die Vorrichtung 200 übermittelten, mittels der Aufnahme-/Empfangseinheit 10 empfangenen, kriteriumsbeeinflußten und/oder parameterbewerteten Daten, Informationen und/oder Meldungen.

Zentrales "Herzstück" der Vorrichtung 200 ist eine Rechen-/Verarbeitungseinheit 40 (sogenannte E[lectronic]C[alculating]U[nit] bzw. E[lectronic]P[rocessing]U[nit]) zum Berechnen und zum Ermitteln der Route aus sämtlichen potentiellen Routen des Straßennetzes unter Berücksichtigung der Kriterien und/oder unter Berücksichtigung der Parameter, insbesondere der Gewichtungsparameter.

Schließlich ist zum Informieren des Führers des Kraftfahrzeugs 400 und/oder dessen Beifahrers eine Ausgabeeinheit 60 (sogenanntes Route Guidance Output Means) zur akustischen und/oder graphischen bzw. optischen Ausgabe der berechneten Route in Form von Verkehrsprognosen und/oder von Wegleitinformationen in der Vorrichtung 200 oder an der Vorrichtung 200 angeordnet.

Wie aus der Darstellung der Figur 1 hervorgeht, sind die vorbeschriebenen Einheiten 10, 20, 30, 32, 40, 50, 60 über mindestens einen Datenbus 70 miteinander jeweils bidirektional verknüpft.

Im Detail ist die Aufnahme-/Empfangseinheit (= Empfänger 10) im Ausführungsbeispiel der Figur 1 dafür ausgelegt, die durch die Kriterien und/oder durch die Parameter beeinflußten oder bewerteten Daten, Informationen und/oder Meldungen, insbesondere in Form von zeitabhängigen Streckenvorgaben und/oder von Daten, Informationen und/oder Meldungen zum Zielort Z, zu empfangen und aufzunehmen.

Sofern diese Daten, Informationen und/oder Meldungen über die drahtlose Funkverbindung 502 zur Aufnahme-/Empfangseinheit 10 gelangen, erfolgt zwischen dem externen Informationsanbieter 500 und der Aufnahme-/Empfangseinheit 10 eine Kodierung der Daten, Informationen und/oder Meldungen, so daß die Aufnahme/Empfangseinheit 10 als Rundfunkempfänger mit Dekodiereinheit für die kodierten Daten, Informationen und/oder Meldungen ausgestaltet ist.

Alternativ oder in Ergänzung hierzu kann die Aufnahme-/Empfangseinheit 10 in erfindungswesentlicher Weise auch als mindestens ein Telephon, insbesondere als mindestens ein Mobiltelephon, realisiert sein, das die Daten, Informationen und/oder Meldungen drahtlos über mindestens ein digitales zellulares Telefonsystem sowie dort verfügbare Datenübertragungsverfahren, etwa
-- auf D[igital]E[uropean]C[ordless]T[elephone]-Basis,
-- auf G[eneral]P[acket]R[adio]S[ervice]-Basis,
-- auf G[lobal] S[ystem for]M[obile Communication]-Basis,
-- auf S[hort]M[essage]S[ervice]-Basis,
-- auf U[niversal]M[obile]T[elecommunication]S[ystem]-Basis und/oder
-- auf W[ireless]A[pplication]P[rotocol]-Basis
empfängt.

Einer Zusammenschau der Figuren 1 und 2 ist entnehmbar, daß die Aufnahme/Empfangseinheit 10 mit einer zum Beispiel am Dach des Kraftfahrzeugs 400 montierten Antenneneinheit 12 ausgestattet ist; mittels dieser Antenne 12 können die über die Verbindung 502 bereitgestellten Daten, Informationen und/oder Meldungen von der Vorrichtung 200 aufgenommen werden.

In der Vorrichtung 200, zweckmäßigerweise in der Aufnahme-/Empfangseinheit 10, ist in erfindungswesentlicher Weise eine zum Beispiel an die Antenne 12 gekoppelte Ortungseinheit 14 integriert, mittels derer die aktuelle Position des Kraftfahrzeugs 400 geortet und unter Mitwirkung der Rechen-/Verarbeitungseinheit 40 abgeglichen werden kann; demzufolge spielt die Ortungseinheit 14 auch im Hinblick auf die Positionierung des Kraftfahrzeugs 400 in bezug auf den Zielort Z eine wesentliche Rolle.

Unabhängig von der Ortungseinheit 14 oder in Verbindung mit der Ortungseinheit 14 ist eine Zeitgebungseinheit 16, zum Beispiel eine Uhr, in der Vorrichtung 200, zweckmäßigerweise in der Aufnahme-/Empfangseinheit 10, integriert.

Mittels dieser Zeitgebungseinheit 16 können sich auf den Routen R1, R2, R3 (vgl. Figur 4) ereignende zeitabhängige Ereignisse, zum Beispiel
- auf ein sich auf der Route R1 befindliches zeitabhängiges Hindernis, wie etwa auf einen überbreiten Schwertransporter, (--> relevante Zeitabhängigkeit durch Fortbewegung des Hindernisses gegeben) oder
- auf eine sich auf der Route R3 befindliche zeitabhängige Verkehrsregeleinheit, wie etwa auf eine Ampelanlage, (--> relevante Zeitabhängigkeit durch Schaltung der Verkehrsregeleinheit gegeben)
bezogenen Zeitdaten, Zeitinformationen und/oder Zeitmeldungen eingeordnet werden.

Dieses Einordnen kann beispielsweise dadurch erfolgen, daß die Zeitdaten, Zeitinformationen und/oder Zeitmeldungen mit der durch DCF77 oder durch G[lobal]P[ositioning]S[ystem] verfügbaren Zeit verglichen werden, so daß in der Rechen/Verarbeitungseinheit 40 der Vorrichtung 200 berechnete Prognosen für die Fahrtzeit auf Teilstrecken verwendet werden können, um die Gesamtroute zu optimieren und um die Geschwindigkeitsempfehlungen zu erzeugen.

Wie auch anhand Figur 1 veranschaulicht, bietet es sich bei Bereitstellen der durch G[lobal]P[ositioning]S[ystem] verfügbaren Zeit an, die Ortungseinheit 14 und die Zeitgebungseinheit 16 im Rahmen der Aufnahme-/Empfangseinheit 10 zusammenzufassen, wobei diese Aufnahme-/Empfangseinheit 10 in erfindungswesentlicher Weise mindestens ein G[lobal]P[ositioning]S[ystem]-Modul aufweist.

Das Map Storage 20, das heißt das nicht-flüchtige Speichern der digitalen Karte des Straßennetzes kann mittels mindestens einer C[ompact]D[isc] oder mittels mindestens einer D[igital]V[ersatile]D[isc] in mindestens einem entsprechenden Laufwerk erfolgen; es kann aber auch als mindestens eine H[ard]D[isc] (= Festplatte) oder als mindestens eine Memory-Karte ausgeführt sein oder als Kombination der vorgenannten Ausgestaltungen.

Eine Kategorisierung sowie Spezifizierung hinsichtlich der vom Informationsanbieter 500 über die Funkverbindung 502 an die Vorrichtung 200 übermittelten, mittels des Receivers 10 empfangenen Daten, Informationen und/oder Meldungen erfolgt beim anhand der Figuren 1 bis 4 dargestellten Ausführungsbeispiel dergestalt, daß eine Gruppe oder mehrere Gruppen von Daten, Informationen und/oder Meldungen übertragen werden (--> Bezugszeichen 502 in Figur 2), die jeweils enthalten:
(i) eine Zielorts- oder Zielgebietsbeschreibung, bestehend aus der Beschreibung des Fahrtzieles Z oder einer Gruppe von Fahrtzielen Z oder eines Gebiets, in dem ein Fahrtziel Z liegen kann;
(ii) Daten zur Identifikation von Straßenabschnitten in der digitalen Karte, die bevorzugt oder vermieden werden sollen, wenn das Ziel Z zu den unter Punkt (i) spezifizierten Zielen gehört;
(iii) einen Gewichtungsparameter je Straßenabschnitt aus Punkt (ii) oder für Gruppen von Straßenabschnitten aus Punkt (ii), mit dem das Maß der Bevorzugung oder der Vermeidung der unter Punkt (ii) genannten Straßenabschnitte eingestellt werden kann;
(iv) Daten zur Identifikation von Straßenabschnitten in der digitalen Karte, die bevorzugt oder vermieden werden sollen, wenn das Ziel Z nicht zu unter Punkt (i) spezifizierten Zielen gehört;
(v) einen Gewichtungsparameter je Straßenabschnitt aus Punkt (iv) oder für Gruppen von Straßenabschnitten aus Punkt (iv), mit dem das Maß der Bevorzugung oder der Vermeidung der unter Punkt (iv) genannten Straßenabschnitte eingestellt werden kann.

Die unter vorstehendem Punkt (i) definierte Zielorts- oder Zielgebietsbeschreibung kann erfolgen durch
- Definition eines geschlossenen Polygons G (vgl. Figur 3) mittels geographischer Koordinaten K (vgl. Figur 3);
- geographische Namen, die ein Gebiet G beschreiben (zum Beispiel Name eines Landesteils, Name einer Stadt, Name eines Stadtteils, Name eines Häuserblocks) und die in der lokalen Datenbasis an Bord des Kraftfahrzeugs 400 vorhanden sind;
- Kombination von geographischen Namen und einen oder mehreren Straßennamen, wodurch eine Straße, ein Straßenabschnitt zwischen zwei Kreuzungen oder ein Gebiet, das durch Straßen eingeschlossen wird, festgelegt wird;
- Codenummern, durch die ein Gebiet G aus einer Anzahl vordefinierter Gebiete ausgewählt wird.

Das Verfahren, mit dem gemäß der vorliegenden Erfindung die Route bestimmt wird, verläuft nun in den folgenden Verfahrensschritten:
[a] Zunächst wird durch Abgleichen von Daten aus der (ersten) nichtflüchtigen Speichereinheit (= Map Storage 20) und der Zielauswahleinheit (= Destination Selection Means 32) durch die Rechen-/Verarbeitungseinheit (= E[lectronic]C[alculating]U[nit] bzw. E[lectronic]P[rocessing]U[nit] 40) festgestellt, ob das vom Benutzer des Navigationssystems 300 mit integrierter Vorrichtung 200 für eine Routenbestimmung gewählte Fahrtziel Z mit einer oder mehreren der Zielorts- oder Zielgebietsbeschreibungen (vgl. vorstehender Punkt (i)), die in empfangenen Informationsgruppen beschrieben sind, übereinstimmt.
[b] Sodann werden mittels der Rechen-/Verarbeitungseinheit 40 alle Straßenabschnitte aus dem Ergebnis von Verfahrensschritt [a] bestimmt, die wegen Übereinstimmung oder Nicht-Übereinstimmung bei einer Routenberechnung erfindungsgemäß mittels der von extern kommenden Daten, Informationen und/oder Meldungen zu beeinflussen sind.
[c] Sodann werden die hierzu empfangenen Gewichtungsparameter zu den entsprechenden Straßenabschnitten zugeordnet.
[d] Schließlich wird die Route gemäß dem jeweiligen systemspezifischen Algorithmus des Navigationsgeräts 300 berechnet, wobei die Bewertung von möglichen Pfaden im Straßennetz (Kostenfunktion) multiplikativ oder additiv entsprechend den zugeordneten Gewichtungsparametern erniedrigt wird, um eine Bevorzugung zu erreichen, bzw. erhöht wird, um eine Vermeidung zu bewirken.

Das vorstehend dargelegte Verfahren wird nunmehr anhand eines Ausführungsbeispiels in Figur 3 verdeutlicht. Bei diesem Ausführungsbeispiel wird die Verkehrsführung nach dem Kriterium beeinflußt, ob ein Fahrtziel innerhalb einer Region G oder außerhalb der Region G liegt.

Für Routen zu einem innerhalb dieser Region G gelegenen Ziel Zi werden in diesem Ausführungsbeispiel die mit dem Bezugszeichen "+i" markierten Straßenabschnitte bevorzugt und die mit dem Bezugszeichen "-i" markierten Straßenabschnitte gemieden. Dies führt zu Routen von den drei Startpunkten (= Positionen A1, A2 und A3) entlang den gestrichelten Linien zum innerhalb der Region G liegenden Ziel Zi.

Für Routen zu einem außerhalb dieser Region G gelegenen Ziel Za werden in diesem Ausführungsbeispiel die mit dem Bezugszeichen "-a" markierten Straßenabschnitte gemieden (eine Bevorzugung von Routen zu solchen Zielen Za außerhalb der Region G ist in diesem Ausführungsbeispiel nicht gezeigt, aber möglich). Dies führt zu Routen von den drei Startpunkten (= Positionen A1, A2 und A3) entlang den gestrichelten Linien zum außerhalb der Region G liegenden Ziel Za.

Das Verfahren gemäß der vorliegenden Erfindung wird anhand eines weiteren Ausführungsbeispiels in Figur 4 verdeutlicht.

Bei diesem Ausführungsbeispiel bedient sich die Vorrichtung 200 der Zeitdaten, der Zeitinformationen und/oder der Zeitmeldungen, die beispielsweise aus den Daten des G[lobal]P[ositioning]S[ystem]-Modul 14, 16 ermittelt werden können.

Der externe Informationsanbieter 500 stellt hierbei Daten, Informationen und/oder Meldungen über das zeitliche Verhalten der Verkehrssteuersysteme
- über die drahtlose Funkverbindung 502 und/oder
- über den in den Aufnahmeschlitz 602 eingeführten mobilen Datenträger 600 zur Verfiigung.

Die Routenberechnung und -ermittlung wird nun mit den durch die Kriterien und/oder durch die Parameter beeinflußten oder bewerteten Daten, Informationen und/oder Meldungen
- des Informationsanbieters 500 und/oder
- des Datenträgers 600
abgeglichen und synchronisiert. Dies bedeutet mit anderen Worten, daß die Routenberechnung die bereitgestellten Daten, Informationen und/oder Meldungen berücksichtigt, wobei folgender Methodik gefolgt wird:
[a] Für alle zeitabhängigen Hindernisse (= Verkehrszeiten auf den in Figur 4 mit gestrichelter Linie dargestellten Schienen) bzw. für sämtliche zeitabhängigen Verkehrsregeleinheiten (= aus den Schienenverkehrszeiten resultierende Schließzeiten der Schienenübergänge) auf möglichen betrachteten Routen R1, R2, R3 wird in Abhängigkeit von der mittels der Zeitgebungseinheit 16 prognostizierten Ankunftszeit die daraus zu erwartende zeitliche Verzögerung mittels der Rechen-/Verarbeitungseinheit 40 berechnet und die Kostenfunktion für die vom jeweiligen zeitabhängigen Hindernis bzw. von der jeweiligen zeitabhängigen Verkehrsregeleinheit betroffene Route R1, R2, R3 entsprechend erhöht.
   Wird während der Fahrt des Kraftfahrzeugs 400 festgestellt, daß die tatsächliche Fahrzeit von der prognostizierten Fahrzeit abweicht oder daß neue Daten, Informationen und/oder Meldungen vorliegen, so wird die Berechnung gemäß Schritt [a] neu ausgeführt.
[b] Nach jeder Berechnung entscheidet sich das System 100 für die "kostenmäßig" (vgl. Kostenfunktion gemäß Schritt [a]) günstigste Route R1 ode R2 oder R3.
[c] Für eine gewählte Route R1 ode R2 oder R3 wird dem Führer des Kraftfahrzeugs 400 eine Geschwindigkeitsempfehlung gegeben, um die Anfahrt an die alle zeitabhängigen Hindernisse bzw. an die zeitabhängigen Verkehrsregeleinheiten zeitlich zu optimieren und demzufolge Wartezeiten zu vermeiden.

Mit dieser Geschwindigkeitsempfehlung kann auch die Geschwindigkeitsregelungseinrichtung (= Tempomat 30) beeinflußt werden. Alternativ oder in Ergänzung hierzu kann die Geschwindigkeitsempfehlung in erfindungswesentlicher Weise auch in das Armaturenbrett, insbesondere in den Tachometer, des Kraftfahrzeugs 400 eingeblendet werden.

Im Ergebnis wird die Verkehrsführung also in Abhängigkeit der Verkehrszeiten auf den in Figur 4 mit gestrichelter Linie dargestellten Schienen und den daraus resultierenden Schließzeiten der Schienenübergänge beeinflußt.

Dementsprechend sind drei verschiedene, in Figur 4 mit durchgezogener Linie dargestellte schematische Verkehrswege R1, R2 und R3 für das Kraftfahrzeug 400 gezeigt; diese Routen R1, R2 und R3 sind in etwa gleich lang, wobei die optimale Route vom Startort A zum Zielort B in Abhängigkeit von den Schließzeiten der Bahnübergänge (= Kreuzungspunkte von Schienenweg und Verkehrsweg) variiert.

Wie vorstehend bereits erläutert, läßt sich die vorliegende Erfindung sowohl als On-Board-Navigation als auch als Off-Board-Navigation realisieren. In diesem Zusammenhang ermöglicht eine Realisierung als Off-Board-Navigation (vgl. Ausführungsbeispiel gemäß den Figuren 1 bis 4) die Verwendung wesentlich aktuellerer Daten, Informationen und/oder Meldungen sowie einer schlankeren und damit kostengünstigeren Vorrichtung 200 und damit Navigationssystems 300.

Abschließend ist hinsichtlich der Nachweisbarkeit der vorliegenden Vorrichtung 200 sowie des vorliegenden Verfahrens darauf hinzuweisen, daß die Kodierung und Übertragung der vorzugsweise zu benutzenden Streckenabschnitte nach an sich bekannten, standardisierten Verfahren erfolgt; hierdurch sind die in das Kraftfahrzeugs 400 übertragenen Daten, Informationen und/oder Meldungen nachvollziehbar.

Der Nachweis am Kraftfahrzeug 400 mit Zielführungssystem sowie mit autonomer Routenberechnung ergibt sich zum Beispiel durch Vermitteln von Geschwindigkeitsempfehlungen an den Führer des Kraftfahrzeugs 400 und/oder durch das Einspeisen der Verkehrsleit-/-regeldaten in das System.

## Patentansprüche

1. System (100) zum Berechnen und/oder zum Ermitteln mindestens einer von mindestens einem Stand- und/oder Startort (A) zu mindestens einem Zielort (Z) oder zu mindestens einem Zielgebiet führenden Route eines Fortbewegungsmittels (400), insbesondere eines Kraftfahrzeugs, auf der Grundlage von Daten, Informationen und/oder Meldungen, insbesondere auf der Grundlage von Verkehrswege beschreibenden Verkehrsweginformationen,
**dadurch gekennzeichnet,**
- **daß**
-- die Route oder zumindest ein Abschnitt der Route oder mindestens ein Teil der Route anhand mindestens eines Kriteriums und/oder anhand mindestens eines Parameters, insbesondere Gewichtungsparameters, bewertbar ist und/oder
-- das Berechnen und/oder das Ermitteln der Route oder zumindest eines Abschnitts der Route oder mindestens eines Teils der Route in Abhängigkeit von mindestens einem Kriterium und/oder in Abhängigkeit von mindestens einem Parameter, insbesondere Gewichtungsparameter, erfolgt und
- daß das Kriterium und/oder der Parameter
-- durch mindestens ein sich insbesondere auf der Route ereignendes zeitabhängiges Ereignis, zum Beispiel
--- durch mindestens ein sich auf der Route befindliches zeitabhängiges Hindernis, wie etwa durch mindestens einen überbreiten Schwertransporter, oder
--- durch mindestens eine sich auf der Route befindliche zeitabhängige Verkehrsregeleinheit, wie etwa durch mindestens eine Ampelanlage, bzw. durch die jeweiligen Schaltzeiten der mindestens einen zeitabhängigen Verkehrsregeleinheit, und/oder
-- durch den Zielort (Z) bzw. durch das Zielgebiet
gegeben ist.

2. System gemäß Anspruch 1, **dadurch gekennzeichnet, daß** das Kriterium und/oder der Parameter
- in Abhängigkeit vom zeitabhängigen Ereignis und/oder
- in Abhängigkeit vom Zielort (Z) bzw. vom Zielgebiet variiert.

3. System gemäß Anspruch 1 oder 2, **dadurch gekennzeichnet, daß** das Kriterium und/oder der Parameter
- extern, zum Beispiel durch mindestens einen Informationsanbieter (500), insbesondere durch mindestens ein Verkehrsleit- oder -regelsystem, über mindestens eine insbesondere drahtlose Verbindung (502) und/oder
- stationär, zum Beispiel durch mindestens einen mindestens einer Vorrichtung (200) zuordbaren, insbesondere austauschbaren und/oder insbesondere mobilen Datenträger (600), beeinflußbar ist.

4. System gemäß mindestens einem der Ansprüche 1 bis 3, **dadurch gekennzeichnet, daß** jedem der Kriterien mindestens einer der Parameter, insbesondere mindestens einer der Gewichtungsparameter, zugeordnet ist.

5. System gemäß mindestens einem der Ansprüche 1 bis 4, **dadurch gekennzeichnet, daß** mindestens eines der Kriterien und/oder mindestens einer der Parameter, insbesondere mindestens einer der Gewichtungsparameter,
- zeitabhängig ist und/oder
- zielabhängig ist und/oder
- mindestens eine Verkehrsprognose aufgrund statistischer Daten, Informationen
und/oder Meldungen enthält.

6. Mindestens einem System (100) gemäß mindestens einem der Ansprüche 1 bis 5 zugeordnete Vorrichtung (200), **gekennzeichnet durch** mindestens eine Rechen/Verarbeitungseinheit (40) zum Berechnen und/oder zum Ermitteln der Route aus sämtlichen potentiellen Routen des Straßennetzes unter Berücksichtigung des mindestens einen Kriteriums und/oder unter Berücksichtigung des mindestens einen Parameters, insbesondere Gewichtungsparameters.

7. Vorrichtung gemäß Anspruch 6, **dadurch gekennzeichnet, daß** beim Berechnen und/oder beim Ermitteln der Route in der Rechen-/Verarbeitungseinheit (40)
- auf mindestens ein sich insbesondere auf der Route ereignendes zeitabhängiges Ereignis, zum Beispiel
-- auf mindestens ein sich auf der Route befindliches zeitabhängiges Hindernis, wie etwa auf mindestens einen überbreiten Schwertransporter, oder
-- auf mindestens eine sich auf der Route befindliche zeitabhängige Verkehrsregeleinheit, wie etwa auf mindestens eine Ampelanlage, bzw. auf die jeweiligen Schaltzeiten der mindestens einen zeitabhängigen Verkehrsregeleinheit,
bezogene Zeitdaten, Zeitinformationen und/oder Zeitmeldungen und/oder
- auf den Zielort (Z) bzw. auf das Zielgebiet bezogene Daten, Informationen und/oder Meldungen berücksichtigt werden.

8. Vorrichtung gemäß Anspruch 7, **dadurch gekennzeichnet, daß** die Zeitdaten, Zeitinformationen und/oder Zeitmeldungen mit der zum Beispiel durch DCF77 oder durch G[lobal]P[ositioning]S[ystem] verfügbaren Zeit verglichen werden.

9. Vorrichtung gemäß mindestens einem der Ansprüche 6 bis 8, **gekennzeichnet durch**
- mindestens eine Aufnahme-/Empfangseinheit (10) zum Aufnehmen und/oder Empfangen der **durch** das mindestens eine Kriterium und/oder **durch** den mindestens einen Parameter beeinflußten oder bewerteten Daten, Informationen und/oder Meldungen, insbesondere in Form von zeitabhängigen Streckenvorgaben und/oder von Daten, Informationen und/oder Meldungen zum Zielort (Z) bzw. Zielgebiet;
- mindestens eine erste, insbesondere nichtflüchtige Speichereinheit (20) zum Speichern mindestens einer digitalen Karte mit sämtlichen potentiellen Routen des Straßennetzes;
- mindestens eine zweite, insbesondere flüchtige Speichereinheit (50) zum Speichern der berechneten und/oder ermittelten Route; und
- mindestens eine Ausgabeeinheit (60) zum insbesondere akustischen und/oder insbesondere graphischen Ausgeben der berechneten Route, beispielsweise in Form von Verkehrsprognosen und/oder von Wegleitinformationen.

10. Vorrichtung gemäß Anspruch 9, **dadurch gekennzeichnet, daß** der Aufnahme/Empfangseinheit (10) mindestens eine Antenneneinheit (12) zum Empfangen der über die Verbindung (502) bereitgestellten Daten, Informationen und/oder Meldungen zugeordnet ist.

11. Vorrichtung gemäß mindestens einem der Ansprüche 6 bis 10, **dadurch gekennzeichnet, daß** die Rechen-/Verarbeitungseinheit (40) mit mindestens einer Geschwindigkeitsregelungseinrichtung (30), insbesondere mit mindestens einem Tempomat, in Verbindung steht, so daß die Geschwindigkeit des Fortbewegungsmittels (400) auf der Grundlage der durch das mindestens eine Kriterium und/oder durch den mindestens einen Parameter beeinflußten oder bewerteten Daten, Informationen und/oder Meldungen regelbar ist.

12. Vorrichtung gemäß mindestens einem der Ansprüche 6 bis 11, **dadurch gekennzeichnet, daß** die Rechen-/Verarbeitungseinheit (40) mit mindestens einer Zielauswahleinheit (32) in Verbindung steht, so daß der Zielort (Z) oder das Zielgebiet auf der Grundlage der durch das mindestens eine Kriterium und/oder durch den mindestens einen Parameter beeinflußten oder bewerteten Daten, Informationen und/oder Meldungen auswählbar ist.

13. Verfahren zum Berechnen und/oder zum Ermitteln mindestens einer von mindestens einem Stand- und/oder Startort (A) zu mindestens einem Zielort (Z) oder zu mindestens einem Zielgebiet führenden Route eines Fortbewegungsmittels (400), insbesondere eines Kraftfahrzeugs, auf der Grundlage von Daten, Informationen und/oder Meldungen, insbesondere auf der Grundlage von Verkehrswege beschreibenden Verkehrsweginformationen,
**dadurch gekennzeichnet,**
- **daß** die Route oder zumindest ein Abschnitt der Route oder mindestens ein Teil der Route
-- anhand mindestens eines Kriteriums und/oder anhand mindestens eines Parameters bewertet wird und/oder
-- in Abhängigkeit von mindestens einem Kriterium und/oder in Abhängigkeit von mindestens einem Parameter berechnet und/oder ermittelt wird und
- daβ das Kriterium und/oder der Parameter
-- durch mindestens ein sich insbesondere auf der Route ereignendes zeitabhängiges Ereignis, zum Beispiel
--- durch mindestens ein sich auf der Route befindliches zeitabhängiges Hindernis, wie etwa durch mindestens einen überbreiten Schwertransporter, oder
--- durch mindestens eine sich auf der Route befindliche zeitabhängige Verkehrsregeleinheit, wie etwa durch mindestens eine Ampelanlage, bzw. durch die jeweiligen Schaltzeiten der mindestens einen zeitabhängigen Verkehrsregeleinheit, und/oder
-- durch den Zielort (Z) bzw. durch das Zielgebiet
definiert wird.

14. Verfahren gemäß Anspruch 13, **dadurch gekennzeichnet, daß** das Kriterium und/oder der Parameter
- in Abhängigkeit vom zeitabhängigen Ereignis und/oder
- in Abhängigkeit vom Zielort (Z) bzw. vom Zielgebiet variiert wird.

15. Verfahren gemäß Anspruch 13 oder 14, **dadurch gekennzeichnet, daß** das Kriterium und/oder der Parameter
- extern, zum Beispiel durch mindestens einen Informationsanbieter (500), insbesondere durch mindestens ein Verkehrsleit- oder -regelsystem, über mindestens eine insbesondere drahtlose Verbindung (502) und/oder
- stationär, zum Beispiel durch mindestens einen mindestens einer Vorrichtung (200) zuordbaren, insbesondere austauschbaren und/oder insbesondere mobilen Datenträger (600), beeinflußt wird.

16. Verfahren gemäß Anspruch 15, **dadurch gekennzeichnet, daß** die zu berechnende und/oder zu ermittelnde Route mit den durch das mindestens eine Kriterium und/oder durch den mindestens einen Parameter beeinflußten oder bewerteten Daten, Informationen und/oder Meldungen
- des Informationsanbieters (500) und/oder
- des Datenträgers (600) abgeglichen und/oder synchronisiert wird.

17. Verfahren gemäß mindestens einem der Ansprüche 13 bis 16, **dadurch gekennzeichnet, daß** die durch das mindestens eine Kriterium und/oder durch den mindestens einen Parameter beeinflußten oder bewerteten Daten, Informationen und/oder Meldungen insbesondere in Form einer oder mehrerer Gruppen übertragen werden, die jeweils enthalten:
- Daten zum Identifizieren von zu bevorzugenden oder zu meidenden Straßenabschnitten in mindestens einer digitalen Karte;
- mindestens einen Gewichtungsparameter für jeden Straßenabschnitt oder für Gruppen von Straßenabschnitten zum Einstellen des Maßes der Bevorzugung oder der Vermeidung der entsprechenden Straßenabschnitte; und
- mindestens eine Beschreibung
-- mindestens eines sich insbesondere auf der Route ereignenden zeitabhängigen Ereignisses, zum Beispiel
-- mindestens eines sich auf der Route befindlichen zeitabhängigen Hindernisses, wie etwa mindestens eines überbreiten Schwertransporters, oder
-- mindestens einer sich auf der Route befindlichen zeitabhängigen Verkehrsregeleinheit, wie etwa mindestens einer Ampelanlage, und/oder
-- des mindestens einen Zielpunkts (Z) oder des mindestens einen Zielgebiets.

18. Verfahren gemäß mindestens einem der Ansprüche 13 bis 17, **gekennzeichnet durch** die folgenden Schritte:
[a.1] Berechnen und/oder Ermitteln der aufgrund des mindestens einen sich insbesondere auf der Route ereignenden zeitabhängigen Ereignisses auf sämtlichen potentiellen Routen des Straßennetzes zu erwartenden jeweiligen zeitlichen Verzögerung in Abhängigkeit von der prognostizierten Ankunftszeit;
[a.2] Erhöhen der sogenannten Kostenfunktion für die jeweilige Route entsprechend der zeitlichen Verzögerung aus Schritt [a.1];
[b] Auswählen der günstigsten Route aus der Menge sämtlicher potentieller Routen des Straßennetzes; und
[c] Ausgeben mindestens einer Geschwindigkeitsempfehlung für die gemäß Schritt [b] ausgewählte Route, insbesondere Beeinflussen mindestens einer Geschwindigkeitsregelungseinrichtung (30), insbesondere mindestens eines Tempomats, entsprechend der Geschwindigkeitsempfehlung.

19. Verfahren gemäß Anspruch 18, **dadurch gekennzeichnet, daß** die Schritte [a.1] und [a.2] jedesmal dann ausgeführt werden, wenn während der Fahrt des Fortbewegungsmittels (400) festgestellt wird,
- daß mindestens ein sich insbesondere auf der Route ereignendes zeitabhängiges Ereignis vorliegt und/oder
- daß die Fahrtzeit des Fortbewegungsmittels (400) von der Prognose für die Fahrtzeit des Fortbewegungsmittels (400) abweicht.

20. Verfahren gemäß mindestens einem der Ansprüche 13 bis 19, **gekennzeichnet durch** die folgenden Schritte:
[a] Feststellen, ob der bzw. das für das Berechnen und/oder für das Ermitteln der Route gewählte Zielort (Z) bzw. Zielgebiet mit mindestens einer der in den **durch** das mindestens eine Kriterium und/oder **durch** den mindestens einen Parameter beeinflußten oder bewerteten Daten, Informationen und/oder Meldungen gegebenen Beschreibungen des Zielorts (Z) bzw. des Zielgebiets übereinstimmt;
[b] Bestimmen aller Abschnitte der Route aus dem Ergebnis von Schritt [a], die wegen Übereinstimmung oder Nicht-Übereinstimmung beim Berechnen und/oder Ermitteln der Route zu beeinflussen sind;
[c] Zuordnen empfangener Gewichtungsparameter zu den entsprechenden Abschnitten der Route; und
[d] Berechnen und/oder Ermitteln der Route gemäß mindestens einem systemspezifischen Algorithmus.

21. Verfahren gemäß Anspruch 20, **dadurch gekennzeichnet, daß** beim Berechnen und/oder Ermitteln der Route die Bewertung möglicher Pfade im Straßennetz multiplikativ oder additiv entsprechend den zugeordneten Gewichtungsparametern
- erniedrigt wird, um eine Bevorzugung zu bewirken, oder
- erhöht wird, um eine Vermeidung zu bewirken.

22. Verfahren gemäß mindestens einem der Ansprüche 13 bis 21, **dadurch gekennzeichnet, daß** jedem der Kriterien mindestens einer der Parameter, insbesondere mindestens einer der Gewichtungsparameter, zugeordnet wird.

23. Verfahren gemäß mindestens einem der Ansprüche 13 bis 22, **dadurch gekennzeichnet, daß** mindestens eines der Kriterien und/oder mindestens einer der Parameter, insbesondere mindestens einer der Gewichtungsparameter,
- zeitabhängig gewählt wird und/oder
- zielabhängig gewählt wird und/oder
- mit mindestens einer Verkehrsprognose aufgrund statistischer Daten, Informationen und/oder Meldungen versehen wird.

24. Mindestens einem Fortbewegungsmittel (400), insbesondere mindestens einem Kraftfahrzeug, zugeordnetes Informationssystem (300), insbesondere Assistenzsystem oder Navigationssystem,
- aufweisend mindestens eine Vorrichtung (200) gemäß mindestens einem der Ansprüche 6 bis 12 und/oder
- gesteuert durch ein Verfahren gemäß mindestens einem der Ansprüche 13 bis 23.

25. Verwendung mindestens einer Vorrichtung (200) gemäß mindestens einem der Ansprüche 6 bis 12 und/oder eines Verfahrens gemäß mindestens einem der Ansprüche 13 bis 23 und/oder mindestens eines Informationssystem (300) gemäß Anspruch 24
- beim Berechnen und/oder beim Ermitteln mindestens einer von mindestens einem Stand- und/oder Startort (A) zu mindestens einem Zielort (Z) oder zu mindestens einem Zielgebiet führenden Route mindestens eines Fortbewegungsmittels (400) auf der Grundlage von Verkehrswege beschreibenden Verkehrsweginformationen,
- beim Ausgeben von Verkehrsweginformationen entlang der berechneten und/oder ermittelten Route,
- beim Beeinflussen von Funktionen, wie etwa Regeln der Geschwindigkeit und/oder des Lichts, mindestens eines Fortbewegungsmittels (400),
- beim Geben von Warnhinweisen, zum Beispiel vor Gefahrenstellen, für den Führer mindestens eines Fortbewegungsmittels (400) und/oder
- beim Optimieren der Route entsprechend der Verkehrssituation, zum Beispiel auf der Grundlage von über mindestens eine drahtlose Verbindung (502) empfangenen, insbesondere kodierten Verkehrsnachrichten.
